# EUROPEAN PATENT SPECIFICATION

(11) **EP 1 243 819 B1**
(45) Date of publication and mention of the grant of the patent: **12.10.2005**
(21) Application number: 01500074.8
(22) Date of filing: 23.03.2001
(51) Int. Cl.: F16J 10/04

(54) **Thin liners in light alloy for internal combustion engine**
Dünnwandige Zylinderbüchse aus Leichtmetall für Brennkraftmaschine
Chemises en alliage léger de faible épaisseur pour moteurs à combustion

(43) Date of publication of application: 25.09.2002
(73) Proprietor: Retolaza Ibargüengoitia, Juan, Vizcaya (ES)
(72) Inventor: Retolaza Ibargüengoitia, Juan, Vizcaya (ES)
(74) Representative: Esteban Perez-Serrano, Maria Isabel

(56) References cited:
- EP-A- 0 367 229
- GB-A- 583 872
- US-A- 2 320 830
- US-A- 5 676 096
- US-A- 5 842 109
- US-A- 5 887 558

## Description

### OBJECT OF THE INTENTION

The present invention relates to a lightweight alloy thin liner for internal combustion engines.

The invention is characterised by claims 1 and 2.

### BACKGROUND OF THE INVENTION

Constant technological advances in design and construction of internal combustion engines which increase the power/weight ratio have led to the generalised use of engines with a cylinder block made of a lightweight alloy, replacing classical heavier ones made of cast iron.

However, although this provides the advantage of a reduced weight, it also implies certain problems related to the friction surfaces with the piston and piston ring.

We are referring to engines built with cylinders cast together with the block, forming a single unit. Other engine blocks with simple housings for removable liners are not the object of this description as they do not present these problems.

In the evolution of the design and construction of engines, a first stage dealt with the problem by using cast iron cylinders or liners which were incorporated to the aluminium block in the fusing operation of said block. In this way the same friction conditions were obtained as when the entire cylinder block was made in cast iron, although this did imply a partial renouncement of the weight advantages which a cylinder block made entirely of aluminium could provide.

Attempts to solve the problem of friction surfaces and thereby obtain a maximum transformation of the cast iron block into a cast aluminium block have been diverse, such as using hypereutectic aluminium alloys for the entire block, so that later mechanical chemical treatments provided the required friction surfaces for the cylinders, or by transformation of the cylinder friction surfaces using projected or electrolytic metal liners, and even by manufacturing cylinders independently from the alloy of the block, employing hypereutectic alloys with synthetic or mineral inclusions on which the block was moulded in another alloy better suited to the moulding requirements.

One of the best solutions to the problem lies in electrolytic coating with a nickel/silicon carbide composite directly onto the cylinders of the lightweight alloy block, except for the problems this entails and which are now listed.

Firstly, it requires a galvanisation plant inserted in the middle of a machining line for manufacturing blocks, which implies considerable problems of pollution, flow and logistics. Secondly, this same electrolytic process must operate simultaneously with all the cylinders of the block, which involves technical complications. Thirdly, after sales services for restoration and conditioning of used and worn out engines are quite complex.

In the State of the Art it is known the way of manufacturing liners, as the ones disclosed in US 2320830, and in US 5842109 where is mentioned that the thickness of the liners is less than 1mm and where a hard metal coating has been applied. In any of both inventions is disclosed a hard metal coating process for hardening the surface of the liners by an electrolytical process, which as it is known allows to obtain much more precise coating.

### DESCRIPTION OF THE INVENTION

However, according to our invention it is possible to obtain lightweight alloy cylinder blocks with all of their advantages and without the aforementioned disadvantages, by using very thin liners according to claim 1 and 2.

This involves liners of the most suitable lightweight alloy with a wall thickness smaller than one millimetre (1 mm) in fully finished conditions, inserted in the cylinders with a running fit.

The material for these lightweight alloy liners may be whichever is best suited for each case. Cast, forged or extruded materials may be used, as long as they are electrolytically plated with chromium or nickel / silicon carbide on their inner surface. Preferably, an Al 2014 extruded alloy is employed which allows to obtain a lightweight alloy material with a tensile strength above 44 Kg/mm2, an elastic limit above 39 Kg/mm2 extension of 6% and Brinell hardness of 130 Kg.

Additionally, the expansion coefficient of said alloy in extruded state is 22.4·10-6 and although the hypereutectic alloy used for the piston has a coefficient of 19.5·10-6 this small difference is compensated by the greater temperature which the piston head reaches with respect to the liner wing or cylinder.

These thin liners made of a lightweight alloy are inserted in the cylinder block with a running fit, i.e. with no play or interference, for which it is useful to make this insertion after cooling the liner and slightly heating the block. The outer surface of the liner is protected by an anodic oxidation treatment to prevent risk from scraping during extraction of the liner from the block when its replacement is required due to wear.

Considering that these liners are made of a lightweight alloy with a wall thickness under 1 mm but with size tolerances in the range of 5 microns, they can be expected to require a delicate manufacturing technique.

In a general sense the order of operations is as follows:

Firstly the interior of the sleeve is operated upon, which must be fully finished maintaining an outer diameter large enough to allow a precision finishing of the surface of the inner diameter, including the electrolytic process.

After machining of the inner diameter, the outer surface is machined and anodised.

## Claims

1. Process for manufacturing a liner for internal combustion engine, which has a wall thickness under 1mm and a chromium coating on its entire inner surface, **characterized in that** the process comprises the steps of:
- Obtaining the liner of a lightweight alloy by casting, forging or extruding, being insertable in a cylinder with a running fit,
- Obtaining said chromium coating on said inner surface by an electrolytical process,
- Coating the external surface by an anodisation.

2. Process for manufacturing a liner for internal combustion engines, which has a wall thickness under 1 mm, **characterised in that** the process comprises the steps of:
- Obtaining the liner of a lightweight alloy by casting, forging or extruding, being insertable in a cylinder with a running fit,
- Obtaining electrolytically a nickel/silicon carbide composite coating on its entire inner surface,
- Coating the external surface by an anodisation.

## Patentansprüche

1. Verfahren zum Herstellen einer Buchse für Verbrennungsmotoren, die eine Wandstärke unter 1 mm hat und eine Chrombeschichtung an ihrer gesamten inneren Oberfläche, **dadurch gekennzeichnet, dass**, das Verfahren folgende Schritte umfasst:
- Erhalten der Buchse aus einer Leichtmetalllegierung durch Giessen, Schmieden oder Strangpressen, wobei diese in einen Zylinder mit einer Spielpassung eingeführt werden kann,
- Erhalten der besagten Chrombeschichtung an besagter innerer Oberfläche durch eine elektrolythisches Verfahren,
- Beschichten der äusseren Oberfläche durch Anodisierung.

2. Verfahren zum Herstellen einer Buchse für Verbrennungsmotoren, die eine Wandstärke unter 1 mm hat, **dadurch gekennzeichnet, dass** das Verfahren folgende Schritte umfasst:
- Erhalten der Buchse aus einer Leichtmetalllegierung durch Giessen, Schmieden oder Strangpressen, wobei diese in einen Zylinder mit einer Spielpassung eingeführt werden kann,
- Elektrolythisches Erhalten einer Nickel/Silikonverbundstoffbeschichtung auf ihrer gesamten inneren Oberfläche.
- Beschichtung der äusseren Oberfläche durch Anodisierung.

## Revendications

1. Procédé de fabrication d'une chemise pour des moteurs de combustion interne, laquelle a une épaisseur de paroi inférieure à 1 mm et un revêtement de chrome sur toute sa surface intérieure, **caractérisé en ce que** le procédé comprend les étapes de :
- obtention de la chemise d'un alliage léger par coulage, forgeage ou extrusion, insérable dans un cylindre avec un ajustement avec jeu,
- obtention dudit revêtement de chrome sur ladite surface intérieure par un procédé électrolytique,
- revêtement de la surface extérieure par une anodisation.

2. Procédé de fabrication d'une chemise pour des moteurs de combustion interne, laquelle a une épaisseur de paroi inférieure à 1 mm, **caractérisé en ce que** le procédé comprend les étapes de :
- obtention de la chemise d'un alliage léger par coulage, forgeage ou extrusion, insérable dans un cylindre avec un ajustement avec jeu,
- obtention électrolytique d'un revêtement composé de nickel/carbure de silicium sur toute sa surface intérieure,
- revêtement de la surface extérieure par une anodisation.
